# EUROPÄISCHE PATENTSCHRIFT

(11) **EP 1 588 869 B1**
(45) Veröffentlichungstag und Bekanntmachung des Hinweises auf die Patenterteilung: **14.11.2007**
(21) Anmeldenummer: 04007321.5
(22) Anmeldetag: 26.03.2004
(51) Int. Cl.: B60C 11/13

(54) **Fahrzeugluftreifen**
Pneumatic tire
Bandage pneumatique

(43) Veröffentlichungstag der Anmeldung: 26.10.2005
(73) Patentinhaber: Continental Aktiengesellschaft, 30165 Hannover (DE)
(72) Erfinder: Bogenschütz, Peter, 30900 Wedemark (DE); Metz, Markus, 31535 Neustadt (DE); Walloch, Frank, 31228 Peine (DE)

(56) Entgegenhaltungen:
- PATENT ABSTRACTS OF JAPAN Bd. 0135, Nr. 42 (M-901), 5. Dezember 1989 (1989-12-05) & JP 1 223006 A (OHTSU TIRE & RUBBER CO LTD :THE), 6. September 1989 (1989-09-06)
- PATENT ABSTRACTS OF JAPAN Bd. 0102, Nr. 22 (M-504), 2. August 1986 (1986-08-02) & JP 61 060308 A (SUMITOMO RUBBER IND LTD), 28. März 1986 (1986-03-28)

## Beschreibung

Die Erfindung betrifft einen Fahrzeugluftreifen mit einem Laufstreifen mit einem Profil, welches durch Umfangsnuten und durch Quernuten gebildete Blöcke aufweist, wobei Quernuten vorgesehen sind, die von Blockflanken begrenzt sind, welche Flankensegmente aufweisen, die unter unterschiedlichen Winkeln zur radialen Richtung verlaufen.

Ein Reifen mit einem derartigen Laufstreifenprofil ist aus der JP 1-223 006 A bekannt. Der Reifen weist ein aus mehreren Blockreihen bestehendes Profil auf, wobei die Blockflanken, welche die Umfangsnuten und die Quernuten begrenzen, Flankensegmente aufweisen, die unter unterschiedlichen Winkeln zur radialen Richtung verlaufen. Dadurch sollen die Wintereigenschaften des Reifens verbessert werden.

Es ist bekannt, dass die Bremseigenschaften eines Reifens auf trockenem Untergrund durch die Steifigkeit des Laufstreifens in Längsrichtung beeinflussbar sind. Um die Bremseigenschaften auf trockenem Untergrund zu verbessern, ist es daher von Vorteil, in Profilen Laufstreifenbänder vorzusehen oder beim Einsatz von Blockreihen die Blöcke in Umfangsrichtung möglichst lang auszuführen. Diese Maßnahmen verringern den Anteil an Quernuten und somit auch die Anzahl der zur Verfügung stehenden Blockkanten, wodurch die Aquaplaningeigenschaften und die Bremseigenschaften auf nassem Untergrund verschlechtert werden. Es ist ferner üblich, die Blockflanken, welche Quernuten begrenzen, unter einem eher kleinen Winkel zur radialen Richtung zu orientieren, um das Quernutvolumen möglichst groß zu halten. Dies kann zu einer stärkeren Beanspruchung und Abnutzung derjenigen Blockkanten führen, die beim Bremsen vorrangig beansprucht werden. Diese Effekte und die Maßnahmen zur Steifigkeitsbeeinflussung sind von der Drehrichtung des Reifens abhängig. Speziell bei Reifen, die nicht mit laufrichtungsgebundenen Profilen ausgeführt sind, stehen bisher keine wirkungsvollen Maßnahmen für beide Drehrichtungen zur Verfügung.

Der Erfindung liegt somit die Aufgabe zu Grunde, bei Reifen mit Profilen, die nicht laufrichtungsgebunden ausgeführt sind, den bisherigen Zielkonflikt zwischen guten Bremseigenschaften auf trockenem Untergrund und guten Aquaplaning- und Nassbremseigenschaften zu lösen, um diese Eigenschaften gleichermaßen verbessern zu können.

Gelöst wird die gestellte Aufgabe erfindungsgemäß dadurch, dass Quernuten von Blockflanken begrenzt sind, die zwei Flankensegmente mit unterschiedlichen Winkeln gegenüber der radialen Richtung aufweisen, wobei ein Flankensegment mit dem größeren Winkel einem Flankensegment mit dem kleineren Winkel gegenüberliegt.

Die Erfindung macht sich daher auf besonders vorteilhafte Weise die Erkenntnis zu Nutze, dass ein größerer Flankenwinkel in einer Quernut den betreffenden Block in Umfangsrichtung versteift und die betreffende Blockkante an der Laufflächenperipherie stabilisiert, wenn dieser Block in Drehrichtung belastet wird. Durch die Maßnahme, die Flankensegmente derart anzuordnen, dass ein stabilisierendes Flankensegment mit dem größeren Winkel gegenüber der Radialen einem Flankensegment mit dem kleineren Winkel gegenüber der Radialen gegenüber liegt, kann der Versteifungseffekt in beide Drehrichtungen des Reifens erzielt werden, ohne das Nutvolumen zu stark zu reduzieren.

Um die Wirksamkeit der erfindungsgemäßen Maßnahmen über die Laufstreifenbreite in beiden Drehrichtungen gleichermaßen sicherzustellen, ist es von Vorteil, wenn sowohl die Flankensegmente, welche unter einem größeren Winkel zur Radialen verlaufen, als auch die diesen gegenüber liegenden Flankensegmente in den einzelnen Quernuten jeweils an übereinstimmenden Positionen angeordnet sind.

Bei einer bevorzugte Ausführungsform der Erfindung beträgt der Winkel der gegenüber der radialen Richtung stärker geneigten Flankensegmente zwischen 5° und 15°, insbesondere mindestens 10°, und der Winkel der gegenüber der radialen Richtung geringer geneigten Flankensegmente zwischen 0° und 5°. In diesen Bereichen lassen sich die gewünschte Verstreifung bzw. Stabilisierung der Profilpositive und das Quernutvolumens besonders gut ausbalancieren.

Für einen gleichförmigen Abrieb des Laufstreifens ist es von Vorteil, wenn sich im Übergangsbereich von dem gegenüber der radialen Richtung geringer geneigten Flankensegment zu dem gegenüber der radialen Richtung stärker geneigten Flankensegment der Flankenwinkel kontinuierlich vergrößert.

Bei einer anderen Ausführungsvariante kann auch vorgesehen werden, dass sich der Winkel der gegenüber der radialen Richtung stärker geneigten Flankensegmente über die Erstreckung dieser Segmente, insbesondere kontinuierlich, vergrößert.

Das Quernutvolumen bleibt, bei einer Variante, bei der die gegenüber der radialen Richtung stärker geneigten Flankensegmente in radialer Richtung in einem Abstand am Nutgrund enden, vorteilhafter Weise weitgehend erhalten.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf einen Teilabwicklung eines Profils eines Laufstreifens,
Fig. 2 im vergrößerten Maßstab eine Draufsicht auf eine Quernut,
Fig. 2a einen Schnitt entlang der Linie A-A der Fig. 2 und Fig. 2b einen Schnitt entlang der Linie B-B der Fig. 2,
Fig. 3 eine alternative Ausführungsform der Erfindung in einem der Fig. 2a entsprechenden Schnitt und
Fig. 4 und Fig. 5 Draufsichten auf weitere Ausführungsformen von erfindungsgemäß ausgeführten Quernuten.

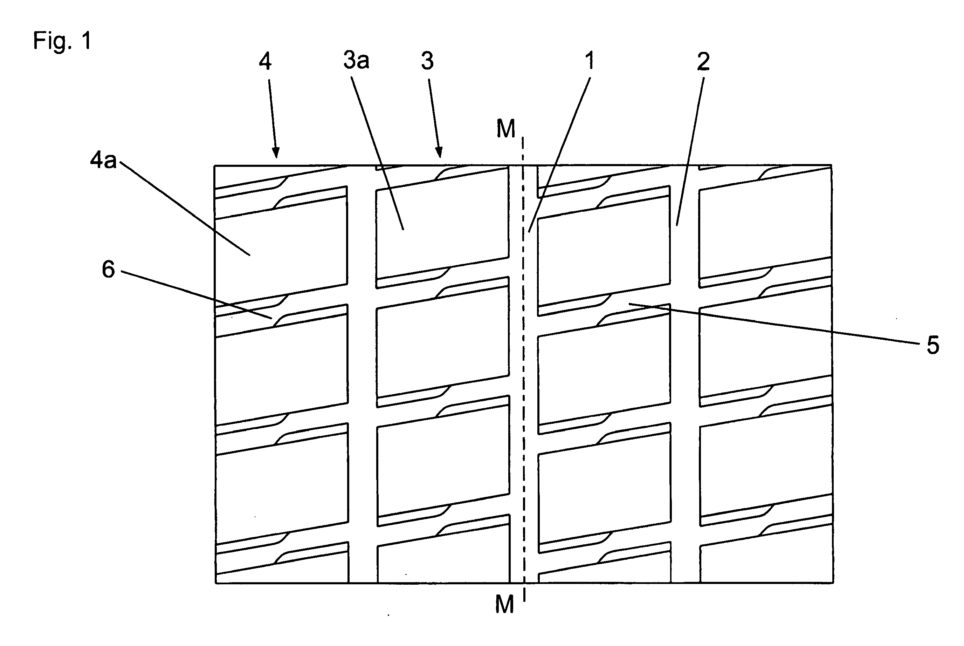

Fig. 1 zeigt eine vereinfachte Ausführung eines Profils für einen Laufstreifen eines Fahrzeugluftreifens für Personenkraftwagen, wobei das dargestellte Profil von der Drehrichtung des Reifens unabhängige Eigenschaften aufweist. Der Laufstreifen weist eine entlang der Äquatorlinie M-M in Umfangsrichtung umlaufende breite Umfangsnut 1 sowie in jeder Laufstreifenhälfte zwei durch je eine weitere breite und in Umfangsrichtung umlaufende Nut 2 voneinander getrennte Blockreihen 3, 4 auf. Die Blockreihen 3 sind die beiden mittleren Blockreihen, die Blockreihen 4 die laufstreifenaußenseitig gelegenen Schulterblockreihen. In den Schulterblockreihen 4 und den mittleren Blockreihen 3 sind die in Umfangsrichtung aufeinander folgenden Blöcke 4a, 5a durch Quernuten 6 bzw. 5 voneinander getrennt.

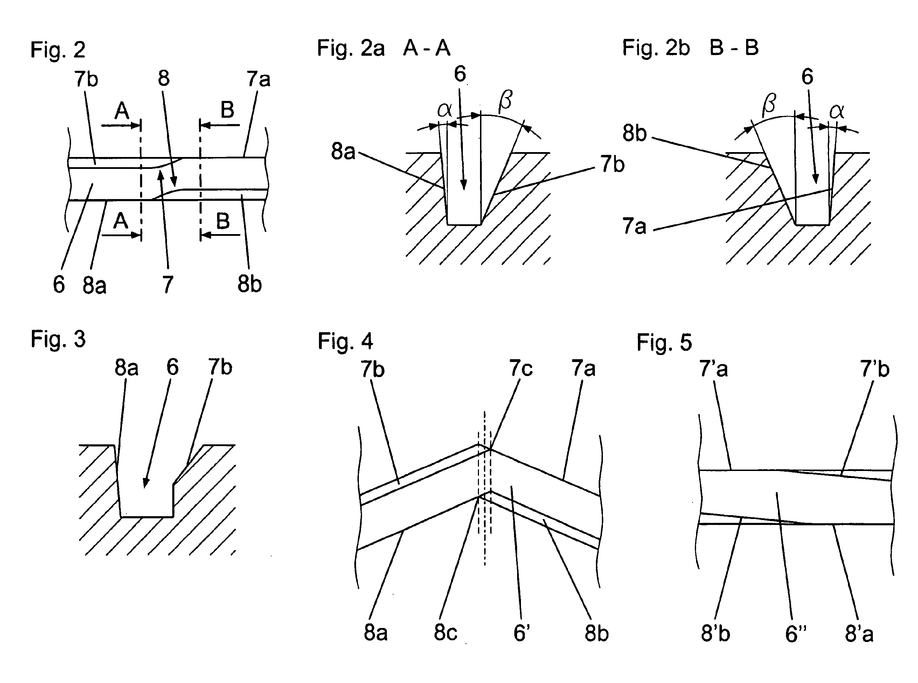

Die Erfindung besteht in einer besonderen Ausführung der die Quernuten 5, 6 begrenzenden Blockflanken 7, 8. Eine bevorzugte Ausführung wird nun anhand der Fig. 2, 2a und 2b beschrieben. Diese Figuren zeigen eine Schulterquernut 6 und die diese begrenzenden Blockflanken 7, 8, welche sich jeweils aus zwei Flankensegmenten 7a, 7b sowie 8a, 8b zusammensetzen. Das Flankensegment 7a und das Flankensegment 8a sind auf herkömmliche Weise ausgeführt und verlaufen unter einem vorzugsweise konstanten Winkel α zur radialen Richtung, der in der Größenordnung zwischen 0° und 5° gewählt wird. Das an das Flankensegment 7a bzw. 8a jeweils anschließende Flankensegment 7b bzw. 8b ist derart ausgeführt, dass es über den Großteil seiner Erstreckung unter einem vorzugsweise konstanten Winkel β in radialer Richtung verläuft, welcher größer als der Winkel α ist und insbesondere zwischen 5° und 15°, insbesondere größer als 10°, gewählt wird. Eine Ausnahme bilden bei der gezeigten Ausführung die Übergangsbereiche der beiden Flankenabschnitte 7a, 8a bzw. 7b, 8b, in welchen, wie es die Zeichnungsfiguren zeigen, sich der Flankenwinkel kontinuierlich von der Größe des Winkels α auf die Größe des Winkels β vergrößert. Der Übergangsbereich nimmt dabei einen kleinen Bereich der Länge der Quernut 6 ein, beispielsweise in der Größenordnung von 10% bis 15% der Quernutlänge. Von besonderer Bedeutung ist die Anordnung der einander gegenüber liegenden Flankensegmente 7a, 7b bzw. 8a, 8b. Wie die Zeichnungsfiguren 2, 2a und 2b zeigen, befindet sich gegenüber dem Flankensegment 7a das Flankensegment 8b und gegenüber dem Flankensegment 7b das Flankensegment 8a. Dabei liegen bei der bevorzugten Ausführung auch die beiden Übergangsbereiche einander gegenüber, sodass, wie insbesondere Fig. 2 zeigt, der Nutgrund der Quernut 6 über den Verlauf der Quernut 6 zumindest im Wesentlichen gleich breit ist.

Durch die besondere gegenseitige Anordnung der Flankensegmente 7a, 7b bzw. 8a, 8b ist es möglich, die Vorteile eines großen Flankenwinkels für die beiden eine Quernut begrenzenden Blockflanken und somit in beiden möglichen Drehrichtungen des Reifens sicherzustellen. Der mit den Flankensegmenten 7b, 8a mit dem größeren Flankenwinkel β erzielbare Stabilisierungseffekt ergibt sich in beide Drehrichtungen, ohne dass das Nutvolumen zu stark reduziert würde, wie es bei einer Vergrößerung des Flankenwinkels über die gesamte Länge der die Quernut begrenzenden Blockflanken der Fall wäre.

In sämtlichen erfindungsgemäß ausgeführten Quernuten wird die Anordnung der Flankensegmente vorzugsweise übereinstimmend vorgenommen, wie es beispielsweise Fig. 1 zeigt.

Fig. 3 zeigt eine mögliche Variante der Ausführung des stärker geneigten Flankensegmentes 7b bzw. 8b. Dieses reicht hier, ausgehend von der Laufflächenperipherie, nicht bis zum Nutgrund.

Eine weitere Ausführungsform der Erfindung bei einer Quernut 6' mit einer Knickstelle ist in Fig. 4 dargestellt. Die Quernut 6' verläuft flach V-förmig. An den Knickstellen 7c, 8c der Blockflanken sind die stärker geneigten Flankensegmente 7b bzw. 8b derart angesetzt, dass der Nutgrund ebenfalls V-förmig verläuft.

Fig. 5 zeigt eine Variante der Erfindung anhand einer gerade verlaufenden Quernut 6". Der Flankenwinkel β der stärker geneigten Flankensegmente 7'b bzw. 8'b nimmt über einen großen Teil der Erstreckung der Segmente 7'b, 8'b kontinuierlich zu. Bei der dargestellten Ausführung erfolgt die Vergrößerung des Flankenwinkels ausgehend von den im Mittelbereich der Quernut 6"gelegenen Enden der Flankensegmente 7'b bzw. 8'b.

Die Erfindung ist auf die dargestellten Ausführungsformen nicht eingeschränkt. So sind insbesondere Kombinationen der einzelnen dargestellten und beschriebenen Ausführungsvarianten miteinander möglich. Erfindungsgemäß ausgeführte Blockflanken müssen ferner nicht die gesamte Länge der Quernuten einnehmen. Es ist ferner möglich, in einem Laufstreifenprofil herkömmlich ausgeführte Quernuten gemeinsam mit Quernuten mit erfindungsgemäß ausgeführten Blockflanken vorzusehen. Erfindungsgemäß ausgeführte Blockflanken können beispielsweise nur im Mittelbereich oder nur in den Schulterbereichen vorgesehen werden. Bei ein- und demselben Laufstreifen können ferner die Positionen der Flankensegmente in einer Blockreihe übereinstimmend, in einer anderen Blockreihe aber abweichend gewählt werden.

## Patentansprüche

1. Fahrzeugluftreifen mit einem Laufstreifen mit einem Profil, welches durch Umfangsnuten (1, 2) und durch Quernuten (5, 6, 6', 6") gebildete Blöcke (3a, 4a) aufweist, wobei Quernuten (5, 6, 6', 6") vorgesehen sind, die von Blockflanken begrenzt sind, welche Flankensegmente (7a, 7b, 8a, 8b, 7'a, 7'b, 8'a, 8'b) aufweisen, die unter unterschiedlichen Winkeln zur radialen Richtung verlaufen,
**dadurch gekennzeichnet,**
**dass** Quernuten (6, 6', 6") von Blockflanken begrenzt sind, die zwei Flankensegmente (7a, 7b, 8a, 8b, 7'a, 7'b, 8'a, 8'b) mit unterschiedlichen Winkeln (α, β) gegenüber der radialen Richtung aufweisen, wobei ein Flankensegment (7a, 8a, 7'a, 8'a) mit dem größeren Winkel (β) einem Flankensegment (7b, 8b, 7'b, 8'b) mit dem kleineren Winkel (α) zumindest im Wesentlichen gegenüberliegt.

2. Fahrzeugluftreifen nach Anspruch 1, **dadurch gekennzeichnet, dass** die Flankensegmente (7a, 7b, 8a, 8b, 7'a, 7'b, 8'a, 8'b) in den einzelnen Quernuten (6, 6', 6") in übereinstimmenden Positionen vorgesehen sind.

3. Fahrzeugluftreifen nach Anspruch 1 oder 2, **dadurch gekennzeichnet, dass** der Winkel (β) der gegenüber der radialen Richtung stärker geneigten Flankensegmente (7b, 8b, 7'b, 8'b) zwischen 5° und 15°, insbesondere mindestens 10°, beträgt.

4. Fahrzeugluftreifen nach Anspruch 1 oder 2, **dadurch gekennzeichnet, dass** der Winkel (α) der gegenüber der radialen Richtung geringer geneigten Flankensegmente (7a, 8a, 7'a, 8'a) zwischen 0° und 5° beträgt.

5. Fahrzeugluftreifen nach einem der Ansprüche 1 bis 4, **dadurch gekennzeichnet, dass** die beiden Flankensegmente (7a, 7b, 8a, 8b, 7'a, 7'b, 8'a, 8'b) aneinander anschließen und sich im Übergangsbereich von dem gegenüber der radialen Richtung geringer geneigten Flankensegment (7a, 8a, 7'a, 8'a) zu dem gegenüber der radialen Richtung stärker geneigten Flankensegment (7b, 8b, 7'b, 8'b) der Flankenwinkel kontinuierlich vergrößert.

6. Fahrzeugluftreifen nach einem der Ansprüche 1 bis 5, **dadurch gekennzeichnet, dass** sich der Winkel (β) der gegenüber der radialen Richtung stärker geneigten Flankensegmente (7'b, 8'b) über die Erstreckung der Segmente (7'b, 8'b) insbes ondere kontinuierlich vergrößert.

7. Fahrzeugluftreifen nach einem der Ansprüche 1 bis 6, **dadurch gekennzeichnet,** die gegenüber radialen Richtung stärker geneigten Flankensegmente (7b, 8b, 7'b, 8'b) in radialer Richtung in einem Abstand vom Nutgrund enden.

## Claims

1. Vehicle pneumatic tyre having a tread with a profile which has blocks (3a, 4a) which are formed by circumferential grooves (1, 2) and transverse grooves (5, 6, 6', 6"), wherein transverse grooves (5, 6, 6', 6'') are provided which are bounded by block edges which have edge segments (7a, 7b, 8a, 8b, 7'a, 7'b, 8'a, 8'b) which extend at different angles to the radial direction, **characterized in that** transverse grooves (6, 6', 6") are bounded by block edges which have two edge segments (7a, 7b, 8a, 8b, 7'a, 7'b, 8'a, 8'b) with different angles (α, β) with respect to the radial direction, wherein an edge segment (7a, 8a, 7'a, 8'a) with the larger angle (β) lies at least essentially opposite an edge segment (7b, 8b, 7'b, 8'b) with the smaller angle (α).

2. Vehicle pneumatic tyre according to Claim 1, **characterized in that** the edge segments (7a, 7b, 8a, 8b, 7'a, 7'b, 8'a, 8'b) are provided at corresponding positions in the individual transverse grooves (6, 6', 6").

3. Vehicle pneumatic tyre according to Claim 1 or 2, **characterized in that** the angle (β) of the edge segments (7b, 8b, 7'b, 8'b) which have a greater incline with respect to the radial direction is between 5° and 15°, in particular at least 10°.

4. Vehicle pneumatic tyre according to Claim 1 or 2, **characterized in that** the angle (α) of the edge segments (7a, 8a, 7'a, 8'a) which have a smaller incline with respect to the radial direction is between 0° and 5°.

5. Vehicle pneumatic tyre according to one of Claims 1 to 4, **characterized in that** the two edge segments (7a, 7b, 8a, 8b, 7'a, 7'b, 8'a, 8'b) adjoin one another and the edge angle increases continuously in the junction region from the edge segment (7a, 8a, 7'a, 8'a) which has a smaller incline with respect to the radial direction to the edge segment (7b, 8b, 7'b, 8'b) which has a greater incline with respect to the radial direction.

6. Vehicle pneumatic tyre according to one of Claims 1 to 5, **characterized in that** the angle (β) of the edge segments (7'b, 8'b) which have a greater incline with respect to the radial direction increases in particularly continuously over the extent of the segments (7'b, 8'b).

7. Vehicle pneumatic tyre according to one of Claims 1 to 6, **characterized in that** the edge segments (7b, 8b, 7'b, 8'b) which have a greater incline with respect to the radial direction end at a distance from the groove base in the radial direction.

## Revendications

1. Bandage pneumatique pour véhicule, qui présente une bande de roulement dotée d'un profil qui présente des blocs (3a, 4a) formés par des rainures périphériques (1, 2) et par des rainures transversales (5, 6, 6', 6"), les rainures transversales (5, 6, 6', 6") prévues étant délimitées par des flancs de bloc qui présentent des segments de flanc (7a, 7b, 8a, 8b, 7'a, 7'b, 8'a, 8'b) qui forment des angles différents par rapport à la direction radiale,
**caractérisé en ce que**
les rainures transversales (6, 6', 6'') sont délimitées par des flancs de bloc qui présentent deux segments de flanc (7a, 7b, 8a, 8b, 7'a, 7'b, 8'a, 8'b) qui forment des angles (α, β) différents par rapport à la direction radiale, un segment de flanc (7a, 8a, 7'a, 8'a) qui présente un angle (β) plus grand étant au moins essentiellement situé face à un segment de flanc (7b, 8b, 7'b, 8'b) qui présente un angle (α) plus petit.

2. Bandage pneumatique pour véhicule selon la revendication 1, **caractérisé en ce que** les segments de flanc (7a, 7b, 8a, 8b, 7'a, 7'b, 8'a, 8'b) sont prévus dans des positions correspondantes dans les différentes rainures transversales (6, 6', 6").

3. Bandage pneumatique pour véhicule selon les revendications 1 ou 2, **caractérisé en ce que** l'angle (β) des segments de flanc (7b, 8b, 7'b, 8'b) inclinés plus fortement par rapport à la direction radiale est compris entre 5° et 15° et est en particulier d'au moins 10°.

4. Bandage pneumatique pour véhicule selon les revendications 1 ou 2, **caractérisé en ce que** l'angle (α) des segments de flanc (7a, 8a, 7'a, 8'a) moins inclinés par rapport à la direction radiale est compris entre 0° et 5°.

5. Bandage pneumatique pour véhicule selon l'une des revendications 1 à 4, **caractérisé en ce que** les deux segments de flanc (7a, 7b, 8a, 8b, 7'a, 7'b, 8'a, 8'b) se raccordent l'un à l'autre, l'angle du flanc augmentant de manière continue dans la zone de transition entre le segment de flanc (7a, 8a, 7'a, 8'a) moins incliné par rapport à la direction radiale et le segment de flanc (7b, 8b, 7'b, 8'b) fortement incliné par rapport à la direction radiale.

6. Bandage pneumatique pour véhicule selon l'une des revendications 1 à 5, **caractérisé en ce que** l'angle (β) des segments de flanc (7'b, 8'b) plus fortement inclinés par rapport à la direction radiale s'agrandit en particulier de manière continue le long de l'extension des segments (7'b, 8'b).

7. Bandage pneumatique pour véhicule selon l'une des revendications 1 à 6, **caractérisé en ce que** les segments de flanc (7b, 8b, 7'b, 8'b) plus fortement inclinés par rapport à la direction radiale se terminent à une distance du fond de la rainure dans la direction radiale.
